(19) Europäisches Patentamt
European Patent Office
Office européen des brevets

(11) EP 1 975 692 A1

(12) **EUROPEAN PATENT APPLICATION**
published in accordance with Art. 158(3) EPC

(43) Date of publication:
**01.10.2008 Bulletin 2008/40**

(21) Application number: **06843065.1**

(22) Date of filing: **22.12.2006**

(51) Int Cl.:
***G02F 1/17*** (2006.01) ***G02F 1/19*** (2006.01)
***G09F 9/30*** (2006.01)

(86) International application number:
**PCT/JP2006/325606**

(87) International publication number:
**WO 2007/083483 (26.07.2007 Gazette 2007/30)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **19.01.2006 JP 2006010878**

(71) Applicant: **KONICA MINOLTA HOLDINGS, INC.**
**Tokyo 100-0005 (JP)**

(72) Inventor: **KOKEGUCHI, Noriyuki**
**Hino-shi**
**Tokyo 191-8511 (JP)**

(74) Representative: **Alton, Andrew**
**Urquhart-Dykes & Lord LLP**
**Tower North Central**
**Merrion Way**
**Leeds LS2 8PA (GB)**

(54) **DISPLAY ELEMENT**

(57) The present invention provides a display element which can be driven at a low voltage in a simple member construction, provides high display contrast, and gives a white impression to a viewer while suppressing white reflectance. The display element comprises an electrolyte containing silver or a compound containing silver in its chemical structure between opposed electrodes to be driven so as to cause dissolution and precipitation of silver, and comprises a color tone-adjusting layer, a transparent electrode and an electrolyte layer being provided in that order as viewed from a viewing direction of the element.

FIG. 1

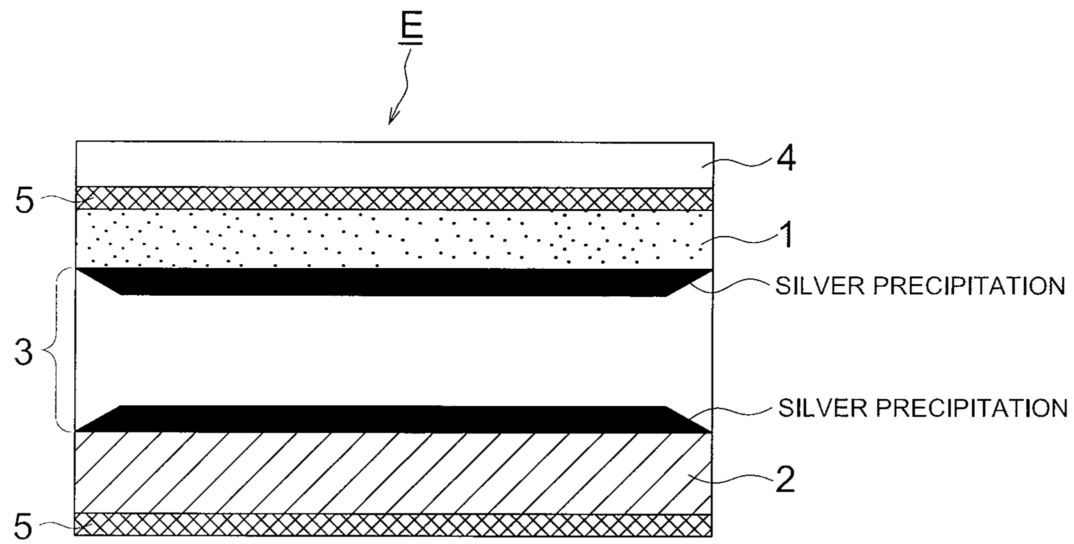




Printed by Jouve, 75001 PARIS (FR)

## Description

### TECHNICAL FIELD

The present invention relates to an electrochromic display element utilizing silver dissolution and deposition.

### BACKGROUND

In recent years, along with enhancement of the operation rate of personal computers, and popularization of network infrastructure, as well as an increase in capacity of data storage and a decrease in its cost, occasions have increasingly occurred in which pieces of information such as documents and images, which have been provided in the form of paper printed matter, are received as simpler electronic information and viewed as received electronic information.

As viewing means for such electronic information, mainly employed are those of light emitting types such as conventional liquid crystal displays and CRTs or recent organic electroluminescence displays. Specifically, when electronic information includes document information, it is required to watch any of the above viewing means for a relatively long period. However, it is hardly stated that the above viewing means are human friendly. It is common knowledge that light emitting type displays result in problems such as eye fatigue due to flicker, inconvenient portability, limitations in reading posture, necessity to look at still images, or an increase in power consumption.

As means to overcome the above drawbacks, are known reflection type displays (having memory function) which utilize outside light and consume no power to maintain images. However, it is difficult to state that due to the following reasons, they exhibit sufficient performance.

Namely, a system employing polarizing plates, such as a reflection type liquid crystal, results in a problem for a white display due to a low reflectance of approximately 40%. In addition, it is difficulty to state that most methods to produce structuring members are simple and easy. Further, polymer dispersion type liquid crystals require high voltage and the contrast of the resulting images is insufficient due to utilizing the difference in refractive indices between organic compounds. Still further, polymer network type liquid crystals result in problems such as application of high voltage and requirement of complicated TFT circuitry to enhance memory capability. Yet further, display elements employing electrophoresis require high voltage of at least 10 V and tend to suffer insufficient durability due to aggregation of electrophoretic particles. Further, electrochromic display elements, though being drivable at a low voltage of at most 3 V, result in insufficient color quality of black and common colors (namely yellow, magenta, cyan, blue, and red) and tend to result in problems such that, in order to secure memory capability, the display cell requires a complicated film structure such as vapor deposition film.

As a display system, which overcomes the drawbacks of each of the above systems, an electrodeposition (hereinafter referred to as ED) system has been known which utilizes dissolution and deposition of metals or salts thereof. ED systems exhibit advantages such as drivability at a low voltage of at most 3 V, a simple cell structure, excellent black and white contrast or excellent black quality, for which various methods have been disclosed (refer, for example, to Patent Documents 1 through 3).

However, a conventional ED system display element has problem in that whiteness of a white background is insufficient. In order to increase the whiteness, a method is considered which incorporates a large amount of titanium oxide in an electrolyte layer. However, this results in the problem that the electrolyte layer is thick, resulting in elevation of driving voltage or in lowering of reaction rate.

It is also known that a colorant is incorporated in an electrolyte layer in order to adjust the tone of the white background. However, a high colorant content of the electrolyte layer influences on reactivity of the electrolyte, and results in deterioration with time of the electrolyte.

Patent Document 1: U.S. Patent No. 4,240,716
Patent Document 2: Patent No. 3428603
Patent Document 3: JP-A 2003-241227

### DISCLOSURE OF THE INVENTION

### PROBLEM TO BE SOLVED BY THE INVENTION

The present inventor has made an intensive study. As a result, he found that an ED system display element, when on white display, a reflectance at 550 nm is from 45% to 60%, has the highest sensitivity to viewer eyes, and an ED system display element exhibits its performance most effectively without deterioration with time and markedly improves the white background, in which a color tone-adjusting layer adjusted for a reflectance at 550 nm to be in the above range is provided on the viewer side separately from the electrolyte.

## MEANS FOR SOLVING THE PROBLEMS

The constitution of the invention is as follows:

1. A display element comprising an electrolyte containing silver or a compound containing silver in its chemical structure between opposed electrodes to be driven so as to cause dissolution and precipitation of silver, wherein a color tone-adjusting layer, a transparent electrode and an electrolyte layer is provided in that order as viewed from a viewing direction of the element, and wherein when white is displayed, a reflectance at 550 nm of the display element without the color tone-adjusting layer is from 45% to 60%.
2. The display element of item 1 above, wherein the color tone-adjusting layer contains at least one kind of optical whitening agents.
3. The display element of item 1 or 2 above, wherein the color tone-adjusting layer contains at least one kind of blue colorants.
4. The display element of any one of items 1 through 3 above, wherein the electrolyte contains at least one of the compounds represented by the following formulae (1) and (2), and at least one of the compounds represented by the following formulae (3) and (4).

Formula (1)

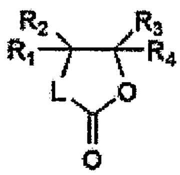

In formula above, L represents an oxygen atom or $CH_2$, and $R_1$ through $R_4$ independently represent a hydrogen atom, an alkyl group, an alkenyl group, an aryl group, a cycloalkyl group, an alkoxyalkyl group or an alkoxy group.

Formula (2)

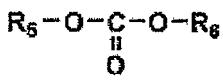

In formula above, $R_5$ and $R_6$ independently represent a hydrogen atom, an alkyl group, an alkenyl group, an aryl group, a cycloalkyl group, an alkoxyalkyl group or an alkoxy group.

Formula (3) $R_7$-S-$R_8$

In formula above, $R_7$ and $R_8$ independently represent a substituted or unsubstituted hydrocarbon group, provided that when a ring containing an S atom is formed, it does not form an aromatic group.

Formula (4)

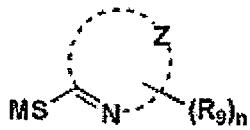

In formula above, M represents a hydrogen atom, a metal atom, or a quaternary ammonium group; Z represents a nitrogen-containing heterocyclic ring; n represents an integer of from 0 to 5; and $R_9$ represents a halogen atom, an alkyl group, an aryl group, an alkylcarbonamido group, an arylcarbonamido group, an alkylsulfonamido group, an arylsulfonamido group, an alkoxy group, an aryloxy group, an alkylthio group, an arylthio group, an alkylcarbamoyl group, an arylcarbamoyl group, a carbamoyl group, an alkylsulfamoyl group, an arylsulfamoyl group, a sulfamoyl group, a cyano group, an alkylsulfonyl group, an arylsulfonyl group, an alkoxycarbonyl group, an aryloxycarbonyl group, an alkylcarbonyl group, an arylcarbonyl group, an acyloxy group, a carboxyl group, a carbonyl group, a sulfonyl group, an amino group, a hydroxyl group or a heterocyclic group, provided that when n is not less than 2, $R_9$'s may be the same or different and may combine with each other to form a condensed ring.

5. The display element of any one of items 1 through 4 above, wherein when [X] represents a mol concentration (mol/kg) of a halogen ion or a halogen atom contained in the electrolyte, and [Ag] represents a total mol concentration (mol/kg) of silver or a compound containing silver in the chemical structure contained in the electrolyte, the condition specified by the following Inequality (1) is satisfied:

Inequality (1)

$$0 \leq [X]/[Ag] \leq 0.01$$

## EFFECT OF THE INVENTION

The present invention can provide a display element with high display contrast, which can be driven at a low voltage in a simple member construction, and gives a white impression to a viewer while suppressing white reflectance.

## BRIEF DESCRIPTION OF THE DRAWING

Fig. 1 is a schematic sectional view showing the structure of the ED display element of this invention.

## EXPLANATION OF THE SYMBOLS

E: ED display section
1, 2: Electrodes
3: Electrolyte
4: Color tone-adjusting layer
5: Substrate

## PREFERRED EMBODIMENT OF THE INVENTION

Preferred embodiments to achieve the present invention will be explained in detail below.

In view of the foregoing, the present inventor has made an intensive study. As a result, he has found that a display element which can be driven at a low voltage in a simple member construction, provides high display contrast, and gives a white impression to a viewer while suppressing white reflectance is realized, the display element comprising

an electrolyte containing silver or a compound containing silver in its chemical structure between opposed electrodes to be driven so as to cause dissolution and precipitation of silver, wherein a color tone-adjusting layer, a transparent electrode and an electrolyte layer being provided in that order as viewed from a viewing direction of the element, and wherein when white is displayed, a reflectance at 550 nm of the display element without the color tone-adjusting layer is from 45% to 60%. Thus, the present inventors have completed the invention.

Next, the present invention will be explained in detail.

The display element of the present invention is an ED system display element comprising an electrolyte containing silver or a compound containing silver in its chemical structure between opposed electrodes which are subjected to driving operation so as to cause dissolution and precipitation of silver.

In the invention, a display element, which can be driven at a low voltage in a simple member construction, provides high display contrast and gives a white impression to a viewer while suppressing white reflectance, is realized, the display element comprising a color tone-adjusting layer between a viewer and an electrode (a transparent electrode) provided on the viewer side.

[Silver or Compound Containing Silver in Chemical Structure]

The term "silver or a compound containing silver in the chemical structure" according to the present invention is a collective term of compounds such as silver oxide, silver sulfide, metallic silver, colloidal silver particles, silver halide, silver complexes, or silver ions. Types of phase states such as a solid state, a solubilized state in liquid, or a gaseous state, as well as types of charged states such as neutral, anionic or cationic are not particularly limited.

(Basic Structure of Display Element)

Fig. 1 is a schematic cross-sectional view showing one example of the structure of the ED display element of the invention.

As shown in Fig. 1, opposed electrodes facing each other are provided at ED display section E. One of the opposed electrodes, Electrode 1, which is provided closer to ED display section E, is a transparent electrode such as an ITO electrode, and the other electrode, Electrode 2 is a metal electrode such as a silver electrode. Electrolyte 3, containing silver or a compound containing silver in the chemical structure, is placed between Electrodes 1 and 2. When voltage having a positive or negative polarity is applied across the electrodes, reduction-oxidation reaction is carried out on Electrodes 1 and 2, and a black silver image state in a reduced state and a transparent silver state in an oxidized state are reversibly changed. In the invention, Color tone-adjusting layer 4 is further provided between a viewer and Electrode 1, one of the opposed electrodes, which is provided closer to ED display section E.

A conventional constitution, comprising a transparent electrode, an electrolyte and white pigment, is difficult to exhibit whiteness of various paper media. It is known to incorporate a colorant (a dye, a pigment or an optical brightening agent) in an electrolyte. However, a display element, which incorporates a colorant in an electrolyte, has problem in storage stability of an element. For example, when such a display element is allowed to stand at high temperature and high humidity for long term, the colorant decomposes, resulting in color tone variation, and in low color reproduction efficiency for its addition amount on account of existing white pigment. Further, it is known to incorporate an optical brightening agent in an electrolyte to improve white display.

A technique is not known, which provides a color tone-adjusting layer outside opposed electrodes, and gives a white impression to a viewer while suppressing reflectance of a display element part without the color tone-adjusting layer. The constitution of the invention can suppress reflectance of the display element part, decrease an addition amount of white pigment, whereby the gap between opposed electrodes can be reduced, resulting in improvement of dissolution and in cost reduction of materials.

[Color Tone-Adjusting Layer]

As the color tone-adjusting layer in the invention, a constitution layer can be employed which contains for example, a colorant such as a dye or a pigment, or an optical brightening agent (also called a bluing agent) in a polymer binder or a polymer film. Typical examples of the dye include dyes described in European Patent No. 549,489; dyes ExF2 to 6 described in JP-A No. 7-152129; dyes AI-1 to 11 described in JP-A No. 3-251840, page 308; dyes described in JP-A No. 6-3770; compounds represented by general formulas (I), (II) and (III) described in JP-A No. 1-280750, page 2, left lower column; compounds (1) to (45) described in ibid, page 3, left lower column to page 5, left lower column; compounds described in JP-A No. 1-150132; compounds described in Moriga, Yoshida, "Senryo to Yakuhin" (Dye and Chemicals), No. 9, page 84 (Kaseihin Kogyo Kyokai); "Shinban Senryo Binran" Dye Handbook) page 242 (Maruzen, 1970); R. Garner "Reports on the Progress of Appl. Chem." 56, page 199 (1971); "Senryo to Yakuhin", No. 19, page 230 (Kaseihin Kogyo Kyokai 1974); "Shikizai" (Colorant Material) No. 62, page 288 (1989), and "Senryo Kogyo" (Dyestuff

Industry) No. 32, page 208; and compounds described in Research Disclosure (hereinafter, also denoted simply as RD) vol. 176, Item 17643 (Dec., 1978), page 25-26; RD vol. 184, Item 18431 (Aug., 1979), page 649-650; and RD vol. 308, Item 308119 (Dec., 1989), page 1003.

Preferred examples of yellow pigments of the pigments include C.I. (Color Index) Direct Yellow 86, C.I. Acid Yellow 23, C.I. Acid Yellow 79, C.I. Pigment Yellow 74, C.I. Pigment Yellow 128, and compounds designated as C.I. Nos. Y-3, Y-167, Y-97, Y-74, Y-12, Y-14, Y-17, T-55, Y-83, Y-154, Y-95, Y-193, Y-83, Y-34, Y-128, Y-93, Y-110, Y-139, Y-199, Y-147, Y-109, Y-13, Y-151, and Y-154. Preferred examples of magenta pigments include Acid 52, C.I. Projet Mazenta, C.I. Pigment Red 122, and compounds designated as C.I. Nos. R-48:1, R-53:1, R-49:1, R-48:3, R-48:2, R-57:1, R-63:1, R-58:4, O-16, R-112, R-3, R-170, R-5, R-146, R-81, V-19, R-122, R-257, R-254, R-202, R-211, R-213, R-268, R-177, R-17, R-23 and R-31. Preferred examples of cyan pigments include C.I. Acid Blue 9, C.I. Direct Blue 199, C.I. Pigment Blue 15:3, and compounds designated as C.I. Nos. B-15, B-15:1 to 15:4, and B-27. The color tone-adjusting layer may be formed, coating a color tone-adjusting layer directly on a substrate or laminating on a substrate a film with a color tone-adjusting layer separately formed.

Colorants used in the invention are preferably colorants exhibiting blue color (blue colorants), and more preferably those having a wavelength giving absorption maximum, $\lambda$max of from 600 to 700 nm.

In order to incorporate these colorants in a color tone-adjusting layer, a coating method is preferred in the invention which adds the colorants to a coating solution for a color tone-adjusting layer in an amount of from 0.01 to 10% by weight, disperses the coating solution in a known disperser to obtain a dispersion, and coats on a substrate the dispersion. In this case, a binder in which the colorants are dispersed is preferably a hydrophilic binder such as polyvinyl alcohol or gelatin. In the invention, the colorants may be incorporated in a substrate constituting electrodes as a color tone-adjusting layer.

Examples of the optical brightening agent include compounds of stilbene type, pyrazoline type, oxazole type, cumarin type, imidazole type, di-styryl-biphenyl type, thiazole type, triazole type, oxadiazole type, thiadiazole type, naphthoimide type, benzimidazole type, benzoxazole type, benzothiazole type, acenaphthene type, and diaminostilbene type. Compounds of stilbene type are preferably used. There are, for example, optical brightening agents of bis(benzoxazolyl)stilbene type, optical brightening agents of bis(benzoxazolyl)naphthalene type, optical brightening agents of bis(benzoxazolyl)thiophene type, optical brightening agents of pyrazoline type, and optical brightening agents of cumarin type. Preferred examples thereof include compounds of formula (I) through (V) described in JP-A 9-203984, and as typical examples thereof, compounds I-(1) through I-(14), compounds II-(1) through II-(11), compounds III-(1) through III-(9), compounds IV-(1) through IV-(8), and compounds V-(1) through V-(5) described in JP-A 9-203984 are preferably employed. The content ratio (by weight) of the optical brightening agent to the resin is usually from 0.01 to 40%, and preferably from 0.03 to 5%.

[Reflectance]

In the display element of the invention, when white is displayed, a reflectance at 550 nm of the display element without the color tone-adjusting layer is from 45% to 60%. The reflectance can be controlled by adjusting the refractive index or addition amount of white scattering material contained in an electrolyte. For example, when the white scattering material is titanium oxide, the coating amount thereof is preferably from 8 to around 30 g/$m^2$. When the coating amount of titanium oxide exceeds 30 g/$m^2$, the maximum reflectance is saturated, which is disadvantageous in reduction of space between opposed electrodes, which is required from viewpoints of resolution. When the coating amount of titanium oxide is less than 8 g/$m^2$, the reflectance is too low, which cannot be compensated by a color tone-adjusting layer.

The reflectance can be measured employing a spectro-colorimeter CM-3700d, produced by Konica Minolta Sensing, Inc.

[Compounds Represented by Formulas (1) through (4)]

In the display element of the present invention, it is preferred that the electrolyte contains at least one of compounds represented by Formulas (1) and (2) and at least one of compounds represented by Formulas (3) and (4).

Initially, the compounds represented by Formula (1) in the present invention will now be described.

In Formula (1) above, L represents an oxygen atom or $CH_2$, and $R_1$ through $R_4$ independently represent a hydrogen atom, an alkyl group, an alkenyl group, an aryl group, a cycloalkyl group, an alkoxyalkyl group, or an alkoxy group.

Examples of the alkyl group include a methyl group, an ethyl group, a propyl group, an isopropyl group, a tert-butyl group, a pentyl group, a hexyl group, an octyl group, a dodecyl group, a tridecyl group, a tetradecyl group, and a pentadecyl group. Examples of the aryl group include a phenyl group and a naphthyl group. Examples of the cycloalkyl group include a cyclopentyl group and a cyclohexyl group. Examples of the alkoxyalkyl group include a $\beta$-methoxymethyl group, a $\gamma$-methoxypropyl group. Examples of the alkoxy group include a methoxy group, an ethoxy group, a propyloxy

group, a pentyloxy group, a hexyloxy group, an octyloxy group and a dodecyloxy group.

Typical examples of the compounds represented by Formula (1) in the invention will be listed below, however, the present invention is not limited thereto.

1-1

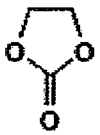

1-2

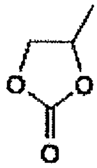

1-3

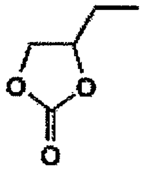

1-4

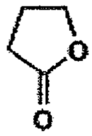

1-5

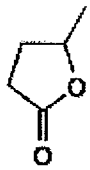

Secondly, the compounds represented by Formula (2) in the invention will now be described.

In Formula (2) above, $R_5$ and $R_6$ independently represent a hydrogen atom, an alkyl group, an alkenyl group, an aryl group, a cycloalkyl group, an alkoxyalkyl group or an alkoxy group.

Examples of the alkyl group include a methyl group, an ethyl group, a propyl group, an isopropyl group, a tert-butyl group, a pentyl group, a hexyl group, an octyl group, a dodecyl group, a tridecyl group, a tetradecyl group, and a pentadecyl group, while examples of the aryl group include a phenyl group, and a naphthyl group, while examples of the cycloalkyl stoup include a cyclopentyl group, and a cyclohexyl group. Examples of the alkoxyalkyl group include a β-methoxymethyl group, a γ-methoxypropyl group, while examples of the alkoxy group include a methoxy group, an ethoxy group, a propyloxy group, a pentyloxy group, a hexyloxy group, an octyloxy group, and a dodecyloxy group.

Typical examples of the compounds represented by Formula (2) in the invention will now be listed, however the presented invention is not limited thereto.

2-1

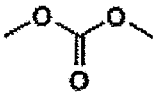

2-2

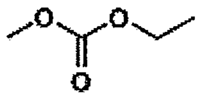

2-3

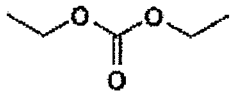

Of the compounds represented by the above exemplified Formulas (1) and (2), specifically preferred are Exemplified Compounds (1-1), (1-2) and (2-3).

The compounds represented by Formulas (1) and (2) in the invention are one type of electrolyte solvents. Another solvent may be employed in combination in the display element of the present invention, as long as the purpose and effects of the present invention are not jeopardized. Specifically listed are tetramethylurea, sulfolane, dimethylsulfoxide, 1,3-dimethyl-2-imidazolidinone, 2-(N-methyl)-2-pyrrolidinone, hexamethylphosphortriamide, N-methylpropionamide, N,N-dimethylacetamide, N-methylacetamide, N,N-dimethylformamide, N-methylformamide, butyronitrile, propionitrile, acetonitrile, acetylacetone, 4-methyl-2-pentanone, 2-butanol, 1-butanol, 2-propanol, 1-propanol, ethanol, methanol, acetic anhydride, ethyl acetate, ethyl propionate, dimethoxyethane, diethoxyfuran, tetrahydrofuran, ethylene glycol, diethylene glycol, triethylene glycol monobutyl ether and water. It is preferred to include at least one of solvents having a solidification point of at most -20 °C and a boiling point of at least 120 °C among these solvents.

Further listed as usable solvents in the present invention may be the compounds described in J. A. Riddick, W. B. Bunger, T. K. Sakano, "Organic Solvents", 4th ed., John Wiley & Sons (1986), Y. Marcus, "Ion Solvation", John Wiley & Sons (1985), C. Reichardt, "Solvents and Solvent Effects in Chemistry", 2nd ed., VCH (1988), G. J. Janz, R. P. T. Tomkins, "Nonaqueous Electrolytes Handbook", Vol. 1, Academic Press (1972).

The electrolyte solvent may be a single variety or a solvent mixture. However preferred is a solvent mixture containing ethylene carbonate. The added amount of ethylene carbonate is preferably from 10 to 90% by weight with respect to the total electrolyte solvent weight. The specifically preferred electrolyte solvent is the solvent mixture of propylene carbonate/ethylene carbonate at a weight ratio of 7/3 to 3/7. When the ratio of propylene carbonate is more than 7/3, the response rate is lowered due to degradation of ionic conductivity, while when it is less than 3/7, the electrolyte tends to precipitate at low temperature.

It is preferable to employ the compound represented by Formula (1) or (2) above together with the compound represented by Formula (3) above in the display element of the invention.

In above Formula (3), $R_7$ and $R_8$ each represent a substituted or unsubstituted hydrocarbon group, including a straight chain group or branched group. Further, the hydrocarbon group may contain at least one of a nitrogen atom, an oxygen atom, a phosphorous atom, a sulfur atom, and a halogen atom. However, when a ring containing an S atom is formed, it does not form an aromatic group.

Listed as a substitutent group of the hydrocarbon group may, for example, be an amino group, a guanidino group, a quaternary ammonium group, a hydroxyl group, a halogen compound, a carboxyl group, a carboxylate group, an amido group, a sulfinic acid group, a sulfonic acid group, a sulfate group, a phosphonic acid group, a phosphate group, a nitro group, and a cyano group.

In general, in order to result in dissolution and deposition of silver, it is necessary to have silver solubilized in an electrolyte. Namely, it is common to employ a method in which silver or silver-containing compound is modified to be soluble compound via coexistence of a compound containing chemical structure species which result in mutual interaction with silver, which forms a coordination bond with silver or forms a weak covalent bond with silver. Known as the above chemical structure species are a halogen atom, a mercapto group, a carboxyl group, an imino group and so on. In the invention, a thioether group also acts effectively as a silver solvent and exhibits features such as minimal effect on coexisting compounds and high solubility in solvents.

Typical examples of the compounds represented by Formula (3) in the invention will be listed below, but the invention is not limited to thereto.

3-1: $CH_3SCH_2CH_2OH$
3-2: $HOCH_2CH_2SCH_2CH_2OH$
3-3: $HOCH_2CH_2SCH_2CH_2SCH_2CH_2OH$
3-4: $HOCH_2CH_2SCH_2CH_2SCH_2CH_2SCH_2CH_2OH$
3-5: $HOCH_2CH_2SCH_2CH_2OCH_2CH_2OCH_2CH_2SCH_2CH_2OH$
3-6: $HOCH_2CH_2OCH_2CH_2SCH_2CH_2SCH_2CH_2OCH_2CH_2OH$
3-7: $H_3CSCH_2CH_2COOH$
3-8: $HOOCCH_2SCH_2COOH$
3-9: $HOOCCH_2CH_2SCH_2CH_2COOH$
3-10: $HOOCCH_2SCH_2CH_2SCH_2COOH$
3-11: $HOOCCH_2SCH_2CH_2SCH_2CH_2SCH_2CH_2SCH_2COOH$
3-12: $HOOCCH_2CH_2SCH_2CH_2SCH_2CH(OH)CH_2SCH_2CH_2SCH_2CH_2COOH$
3-13: $HOOCCH_2CH_2SCH_2CH_2SCH_2CH(OH)CH(OH)CH_2SCH_2CH_2SCH_2CH_2COOH$
3-14: $H_3CSCH_2CH_2CH_2NH_2$
3-15: $H_2NCH_2CH_2SCH_2CH_2NH_2$
3-16: $H_2NCH_2CH_2SCH_2CH_2SCH_2CH_2NH_2$
3-17: $H_3CSCH_2CH_2CH(NH_2)COOH$
3-18: $H_2NCH_2CH_2OCH_2CH_2SCH_2CH_2SCH_2CH_2OCH_2CH_2NH_2$
3-19: $H_2NCH_2CH_2SCH_2CH_2OCH_2CH_2OCH_2CH_2SCH_2CH_2NH_2$
3-20: $H_2NCH_2CH_2SCH_2CH_2SCH_2CH_2SCH_2CH_2SCH_2CH_2NH_2$
3-21: $HOOC(NH_2)CHCH_2CH_2SCH_2CH_2SCH_2CH_2CH(NH_2)COOH$
3-22 : $HOOC(NH_2)CHCH_2SCH_2CH_2OCH_2CH_2OCH_2CH_2SCH_2CH(NH_2)COOH$
3-23: $HOOC(NH_2)CHCH_2OCH_2CH_2SCH_2CH_2SCH_2CH_2OCH_2CH(NH_2)COOH$
3-24: $H_2N(O=)CCH_2SCH_2CH_2OCH_2CH_2OCH_2CH_2SCH_2C(=O)NH_2$
3-25: $H_2N(O=)CCH_2SCH_2CH_2SCH_2C(O=)NH_2$
3-26: $H_2NHN(O=)CCH_2SCH_2CH_2SCH_2C(=O)NHNH_2$
3-27: $H_3C(O=)CNHCH_2CH_2SCH_2CH_2SCH_2CH_2NHC(=O)CH_3$
3-28: $H_2NO_2SCH_2CH_2SCH_2CH_2SCH_2CH_2SO_2NH_2$
3-29: $NaO_3SCH_2CH_2CH_2SCH_2CH_2SCH_2CH_2CH_2SO_3Na$
3-30: $H_3CSO_2NHCH_2CH_2SCH_2CH_2SCH_2CH_2NHO_2SCH_3$
3-31: $H_2N(NH)CSCH_2CH_2SC(NH)NH_2 \cdot 2HBr$
3-32: $H_2N\ (NH)CSCH_2CH_2OCH_2CH_2OCH_2CH_2SC(NH)NH_2 \cdot 2HCl$

3-33: $H_2N(NH)CNHCH_2CH_2SCH_2CH_2SCH_2CH_2NHC(NH)NH_2\cdot 2HBr$

3-34 : $[(CH3)_3NCH_2CH_2SCH_2CH_2SCH_2CH_2N(CH_3)_3]^{2+}\cdot 2Cl^-$

3-35

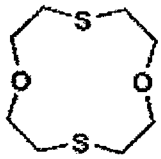

3-36

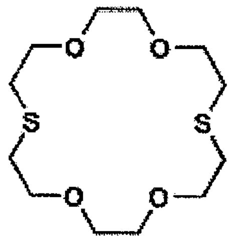

3-37

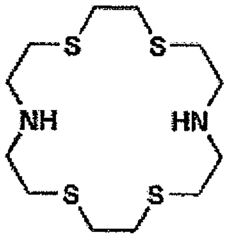

3-38

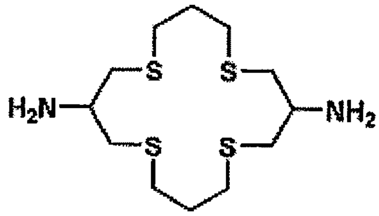

3-39

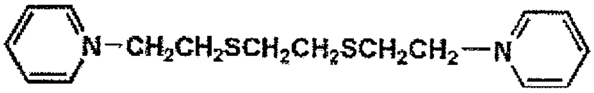

3-40

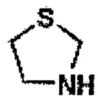

3-41

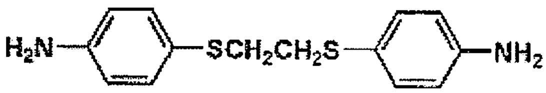

3-42

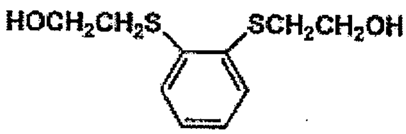

3-43

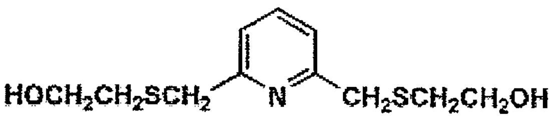

3-44

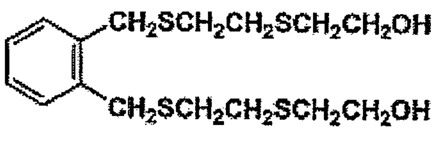

3-45

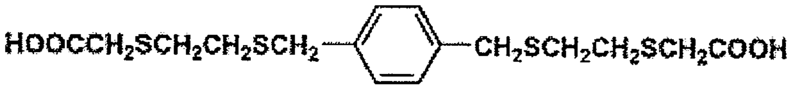

3-46

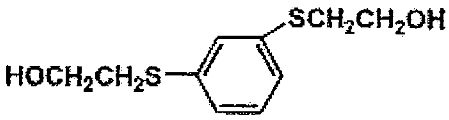

3-47

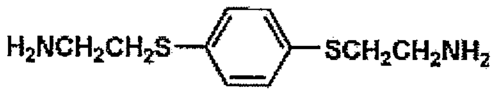

Compound 3-2 is specifically preferred among the above exemplified compounds in view of realizing the purposes and effects of the present invention.

The compounds represented by Formula (4) in the invention will be explained below.

In above Formula (4), M represents a hydrogen atom, a metal atom or a quaternary ammonium group; Z represents a nitrogen-containing heterocyclic ring; n represents an integer of 0 to 5; and $R_9$ represents a hydrogen atom, a halogen atom, an alkyl group, an aryl group, an alkylcarbonamido group, an arylcarbonamido group, an alkylsulfonamido group, an arylsulfonamido group, an alkoxy group, an aryloxy group, an alkylthio group, an arylthio group, an alkylcarbamoyl group, an arylcarbamoyl group, a carbamoyl group, an alkylsulfamoyl group, an arylsulfamoyl group, a sulfamoyl group, a cyano group, an alkylsulfonyl group, an arylsulfonyl group, an alkoxycarbonyl group, an aryloxycarbonyl group, an alkylcarbonyl group, an arylcarbonyl group, an acyloxy group, a carboxyl group, a carbonyl group, a sulfonyl group, an amino group, a hydroxyl group or a heterocyclic group, provided that when n represent at least 2, plural $R_9$'s may be the same or different, and may combine with each other to form a condensed ring.

Examples of metal atoms represented by M of Formula (4) include Li, Na, K, Mg, Ca, Zn, and Ag, and examples of quaternary ammonium include $NH_4$ , $N(CH_3)_4$, $N(C_4H_9)_4$, $N(CH_3)_3C_{12}H_{25}$, $N (CH_3)_3C_{16}H_{33}$, and $N (CH_3)_3CH_2C_6H_5$.

Examples of the nitrogen-containing heterocyclic ring represented by Z of Formula (4) include a tetrazole ring, a triazole ring, an imidazole ring, an oxadiazole ring, a thiadiazole ring, an indole ring, an oxazole ring, a benzoxazole ring, a benzimidazole ring, a benzothiazole ring, a benzoselenazole ring and a naphthoxazole ring.

Examples of the halogen atom represented by $R_9$ of Formula (4) include a fluorine atom, a chlorine atom, a bromine atom and a iodine atom; examples of the alkyl groups include a methyl group, an ethyl group, a propyl group, an i-propyl group, a butyl group, a t-butyl group, a pentyl group, a cyclopentyl group, a hexyl group, a cyclohexyl group, an octyl group, a dodecyl group, a hydroxyethyl group, a methoxyethyl group, a trifluoromethyl group, and a benzyl group; examples of the aryl group include a phenyl group and a naphthyl group; examples of the alkylcarbonamido group include an acetylamino group, a propionylamino group, and a butyroylamino group; examples of the arylcarbonamido group include a benzoylamino group; examples of the alkylsulfonamido group include a methanesulfonylamino group and an ethanesulfonylamino group; examples of the arylsulfonamido group include a benzenesulfonylamino group and a toluenesulfonylamino group; examples of the aryloxy group include a phenoxy group; examples of the alkylthio group include a methylthio group, an ethylthio group, and a butylthio group; examples of the arylthio group include a phenylthio group and a tolylthio group; examples of the alkylcarbamoyl group include a methylcarbamoyl group, a dimethylcarbamoyl group, an ethylcarbamoyl group, a diethylcarbamoyl group, a dibutylcarbamoyl group, a piperidylcarbamoyl group, and a morphorylcarbamoyl group; examples of the arylcarbamoyl group include a phenylcarbamoyl group, a methylphenylcarbamoyl group, an ethylphenylcarbamoyl group, and a benzylphenylcarbamoyl group; examples of the alkylsulfamoyl group include a methylsulfamoyl group, a dimethylsulfamoyl group, an ethylsulfamoyl group, a diethylsulfamoyl group, a dibutylsulfamoyl group, a piperidylsulfamoyl group, and a morphorylsulfamoyl group; examples of the arylsulfamoyl group include a phenylsulfamoyl group, a methylphenylsulfamoyl group, an ethylphenylsulfamoyl group, and a benzylphenylsulfamoyl group; examples of the alkylsulfonyl group include a methanesulfonyl group and an ethanesulfonyl group; examples of the arylsulfonyl group include a phenylsulfonyl group, a 4-chlorophenylsulfonyl group, and a p-toluenesulfonyl group; examples of the alkoxycarbonyl group include a methoxycarbonyl group, an ethoxycarbonyl group, and a butoxycarbonyl group; examples of the aryloxycarbonyl group include a phenoxycarbonyl group; examples of the alkylcarbonyl group include an acetyl group, a propionyl group, and a butyroyl group; examples of the arylcarbonyl group include a benzoyl gropup and an alkylbenzoyl group; examples of the acyloxy group include an acetyloxy group, a propionyloxy group, and a butyroyloxy group; examples of the heterocyclyl group include an oxazole ring, a thiazole ring, a triazole ring, a selenazole ring, a tetrazole ring, an oxadiazole ring, a thiadiazole ring, a thiazine ring, a triazine ring, a benzoxazole ring, a benzothiazole ring, an indolenine ring, a benzoselenazole ring, a naphthothiazole ring, a

triazaindolizine ring, a diazaindolizine ring, and a tetraazaindolizine ring. These substituents include those which have a substituent.

Preferred examples of the compound represented by Formula (4) will be listed below, but the invention is not limited thereto.

4-1

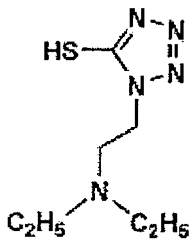

4-2

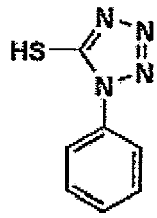

4-3

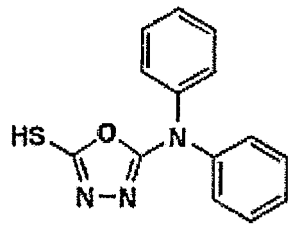

4-4

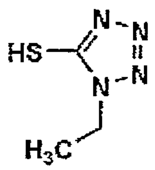

4-5

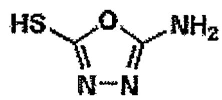

4-6

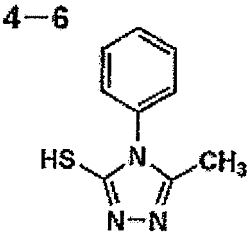

4-7

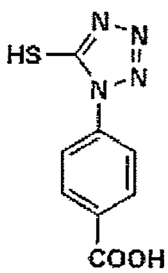

4-8

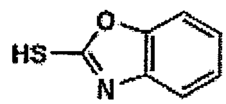

4-9

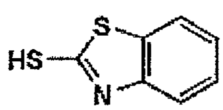

4-10

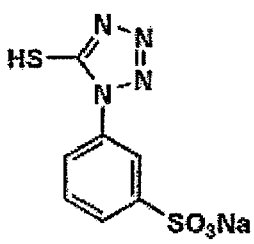

4-11

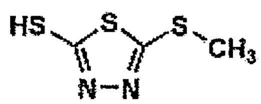

4-12

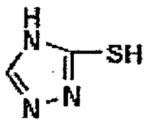

4-13

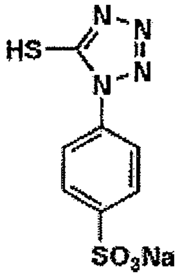

4-14

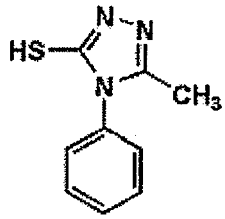

4-15

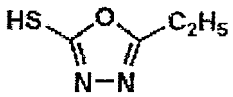

4-16

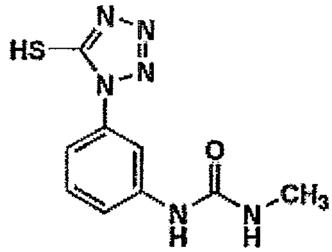

4-17

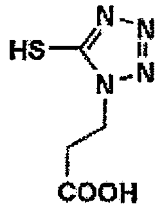

4-18

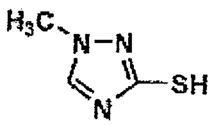

4-19

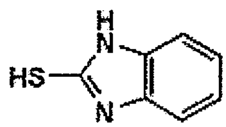

Specifically preferred are Exemplified Compounds 4-12 and 4-18 among the compounds exemplified as above, in view of satisfactorily realizing the objects and effects of the present invention.

[Concentration Ratio of Halogen Ion and Silver Ion]

It is preferable to satisfy the conditions specified by following Inequality (1) in the display element of the present invention:

Inequality (1)

$$0 \leq [X]/[Ag] \leq 0.01$$

Halogen atoms, as described in the present invention refer to any of the iodine, chloride, bromine, and fluorine atoms. When [X] / [Ag] is not less than 0.01, during oxidation-reduction reaction of silver, $X^- \rightarrow X_2$ occurs. This reaction becomes one of the factors in which $X_2$ easily undergoes cross oxidation with blackened silver to dissolve blackened silver, resulting in a decrease in memory capability. Consequently, it is preferable that the mol concentration of halogen atoms is as low as possible with respect to the mol concentration of silver. In the invention, $0 \leq [X] / [Ag] \leq 0.001$ is more preferred. When halogen ions are added, in view of enhancement of memory capability, the sum of mol concentration of each of the halogen species is
[I] < [Br] < [Cl] < [F].

[Electrolyte - Silver Salt]

In the display element of the invention, employed may be known silver compounds such as silver iodide, silver chloride, silver bromide, silver oxide, silver sulfide, silver citrate, silver acetate, silver behenate, silver trifluoromethane sulfonate, silver p-toluenesulfonate, silver salts of mercapto compounds, and silver complexes of iminodiacetic acids. Of these, it is preferable to employ, as silver salts, compounds which do not contain halogen, carboxylic acid, nor a nitrogen atom exhibiting coordination capability with silver, and for example, preferred is silver p-toluenesulfonate.
The silver ion concentration in the electrolyte in the invention is preferably 0.2 mol/kg $\leq$ [Ag] $\leq$ 2.0 mol/kg. When the silver ion concentration is at most 0.2 mol/kg, a diluted silver solution is formed to lower the driving rate, while when it exceeds 2 mol/kg, solubility tends to lower to result in inconvenience of deposition during storage at low temperature.
The display element of the invention may optionally comprise various component layers besides the component elements described above.

[Porous White Scattering Layer]

In the invention, the display element can comprise a porous scattering layer in enhancing display contrast or white display reflectance.
The porous white scattering layer applicable to the display element of the invention is formed by coating an aqueous mixture of an aqueous polymer substantially insoluble in an electrolyte solvent and a white pigment, and drying it.
White pigments applicable to the invention include, for example, titanium dioxide (anatase or rutile type), barium sulfate, calcium carbonate, aluminum oxide, zinc oxide, magnesium oxide and zinc hydroxide, magnesium hydroxide, magnesium phosphate, hydrogen magnesium phosphate, alkaline earth metal salt, talc, kaolin, zeolite, acid clay, glass; organic compounds such as polyethylene, polystyrene, acrylic resin, ionomer, ethylene-vinyl acetate copolymer resin, benzoguanamine resin, urea-formalin resin, melamine-formalin resin, polyamide resin. These are used singly or in combination, or in a state including voids changing refractive index.
Titanium dioxide, zinc oxide, zinc hydroxide are preferably employed among the white particles mentioned above in this invention. Further, employed as titanium oxide may be titanium oxide which has been subjected to a surface treatment employing an inorganic oxide (such as $Al_2O_3$, AlO(OH), or $SiO_2$ or titanium oxide which has been subjected to a treatment employing an organic compound such as trimethylolethane, triethanolamine acetic acid salts, or trimethylcyclosilane, in addition to the above surface treatment.
It is preferable to employ titanium oxide or zinc oxide in preventing staining at high temperature and in reflectance due to index of refraction among these white particles.
In the invention, there are, as the aqueous polymer substantially insoluble in an electrolyte solvent, a water-soluble polymer and a polymer dispersible in an aqueous solvent.
Examples of a water-soluble compound include proteins such as gelatin and its derivatives; natural compounds including polysaccharides, such as cellulose derivatives, starch, gum arabic, dextran, pullulan and carrageenan; and synthetic polymer compounds such as polyvinyl alcohol, polyvinyl pyrrolidone, a acrylamide polymer and their derivatives. Gelatin derivatives include acetylated gelatin and phthalated gelatin, polyvinyl alcohol derivatives include an end alkyl-modified polyvinyl alcohol and an end mercapto-modified polyvinyl alcohol, and cellulose derivatives include hydroxyethyl cellulose, hydroxypropyl cellulose and carboxymethyl cellulose. There are also usable compounds described in Research disclosure or JP-A No. 64-13546 at page 71-75 and highly water-absorbing polymers described in U.S. Patent No. 4,960,681 and JP-A No. 62-245260, such as homopolymers of vinyl monomer containing -COOM or -$SO_3$M (in which M is a hydrogen atom or an alkali metal) and copolymers of the foregoing monomers or those of these monomers and other vinyl monomers (e.g., sodium methacrylate, ammonium methacrylate, potassium methacrylate). These binders may be used singly or in combination.
In the invention are preferably used gelatin and its derivatives, and polyvinyl alcohol and its derivatives.
Examples of a polymer dispersible in an aqueous solvent include natural rubber latex and latexes of styrene butadiene rubber, butadiene rubber, nitrile rubber, chloroprene rubber and isoprene rubber; and thermosetting resins dispersible in an aqueous solvent, such as polyisocyanate, epoxy, acryl, silicone, polyurethane, urea, phenol, formaldehyde, epoxy-polyamide, melamine and alkyd resins and vinyl resin. Of these polymers, an aqueous polyurethane resin, as described in JP-A 10-76621, is preferred.
The expression, "being substantially insoluble in an electrolyte solvent" is defined as a dissolution amount per 1 kg of an electrolytic solvent being from 0 g to 10 g at a temperature of from -20 °C to 120 °C. The dissolution amount can be determined by a weight measurement method or a component quantitative measurement method according to liquid chromatography or gas chromatography.
The aqueous mixture of an aqueous compound and a white pigment is preferably in the form of a white pigment dispersed in water according to a known dispersion method. The volume ratio of aqueous compound/white pigment is preferably in the range from 1 to 0.01, and more preferably from 0.3 to 0.05.

The aqueous mixture of an aqueous compound and a white pigment is coated on a medium and may be coated at any position thereof, as long as it is on a constituting component between opposing electrodes of the display element but is provided preferably on the surface of at least one of the opposing electrodes. Methods of providing on the medium include a coating system and a liquid-spraying system, including a spray system through gas phase, such as a system of jetting liquid droplets by employing vibration of a piezoelectric element, for example, a ink-jet head of a piezo-system, a bubble jet system (trade name) of jetting liquid droplets by using a thermal head employing bumping, and a spray system of spraying liquid by air pressure or liquid pressure.

A coating system can be chosen from commonly known coating systems, including, for example, an air doctor coater, a blade coater, a rod coater, a knife coater, a squeeze coater, a dipping coater, a reverse roller coater, a transfer roller coater, a curtain coater, a double roller coater, a slide hopper coater, a gravure coater, a kiss roller coater, a bead coater, a cast coater, a spray coater, a calender coater, and an extrusion coater.

An aqueous mixture of an aqueous compound and a white pigment which is provided on a medium may be dried by any method of evaporating water. Examples thereof include heating by a heat source, a heating method of using infrared light and a heating method employing electromagnetic induction. Distillation of water may be conducted under reduced pressure.

In the invention, the expression "porous" is referred to as follows: the aqueous mixture of an aqueous compound and a white pigment is coated onto an electrode and dried to form a porous white scattering material. An electrolyte solution containing silver or a compound containing silver in the molecule is provided on the material and sandwiched by opposing electrodes, and when an electric potential difference is applied between the opposing electrodes to cause a dissolution and deposition reaction of silver, ionic species are movable and penetrable between the electrodes.

In the display element of the invention, it is preferred to perform a hardening reaction of the aqueous compound by a hardening agent during or after coating or drying of the aqueous mixture.

As a hardening agent usable in the invention are cited hardening agents described in, for example, U.S. Patent No. 4,678,739, col. 41; U.S. Patent No. 4,791,042; JP-A Nos. 59-116655, 62-245261, 61-18942, 61-249054, 61-245153, and 4-218044. Specific examples thereof include an aldehyde hardener, an aziridine hardener, an epoxy hardener, a vinylsulfone hardener [e.g., N,N'-ethylene-bis(vinylsulfonylacetoamido)ethane], a N-methylol hardener [e.g., dimethylol urea], boric acid and a polymeric hardener (compounds described in JP-A 62-234157). In case when using gelatin as an aqueous compound, a vinylsulfone hardener or chlorotriazine hardener is preferably used singly or in combination. Further, when polyvinyl alcohol is employed, it is preferable to employ boron-containing compounds such as boric acid and metaboric acid.

These hardening agents are used preferably in amount of from 0.001 to 1 g per g of aqueous compound, and more preferably from 0.005 to 0.5 g. It is feasible to control humidity during heat treatment or hardening reaction to enhance layer strength.

[Porous Electrode containing Metal Oxide]

The display element of the invention can contain a porous electrode containing a metal oxide.

It has been found in the display element of the invention that when the surface of the electrode opposite a viewer side of the opposed electrodes is protected with a porous electrode containing a metal oxide, oxidation-reduction reaction of silver or a compound containing silver in the chemical structure is carried out on or in the porous electrode. This can increase choices of kinds of an electrode opposite a viewer side, and improve durability of the electrode.

Examples of the metal oxides constituting the porous electrode in the invention include titanium oxide, silicon oxide, zinc oxide, tin oxide, Sn-doped indium oxide (ITO), antimony-doped tin oxide (ATO), fluorine-doped tin oxide (FTO) and aluminum-doped zinc oxide, and a mixture thereof.

The porous electrode can be formed, binding or contacting a plurality of particles of the metal oxide described above. The average particle size of the metal oxide particles is preferably from 5 nm to 10 μm, and more preferably from 20 nm to 1 μm. The specific surface area of the metal oxide particles, based on the simple BET method, is preferably from $1x10^{-3}$ to $1x10^{2}$ $m^2/g$ and more preferably from $1x10^{-2}$ to 10 $m^2/g$. The metal oxide particles may be in any form, such as an amorphous form, needle form or a spherical form.

As a method for forming or binding the metal oxide particles, a sol-gel method or a sintering method can be employed. Examples thereof include, for instance, a method described in 1) Journal of the Ceramic Society of Japan 102, 2, p 200 (1994), 2) Yogyo-kyokai-shi 90 [4] p 157, and 3) J. of Non-Cryst. Solids 82, 400 (1986). There can be also employed a method for preparing a porous electrode which coats, on a substrate, a dispersion solution in which titanium oxide dendrimer particles prepared by a gas phase method are dispersed, followed by drying at 120 to around 150 °C to remove the solvent. The metal oxide particles are preferably in the binding state, and it is preferred that such metal oxide particles have a durability of not less than 0.1 g, and preferably not less than 1 g, the durability measured according to a continuous weight load type surface meter (for example, a scratch meter).

The expression "porous" in the invention refers to the state in which given potential difference between the

opposed electrodes so as to cause dissolution and precipitation reaction of silver, ion species produced can move through the porous electrode provided.

[Electron Insulation Layer]

The display element of the invention can comprise an electron insulation layer.

The electron insulation layer applicable to the invention may be a layer which has ion conductivity as well as electron insulation property. Examples thereof include a solid electrolyte film made of a salt or a polymer having a polar group, a quasi-solid electrolyte film which is a porous film with high electron insulation property and has an electrolyte in the voids, a polymer porous film having voids and a porous film made of an inorganic material having low dielectric constant such as a silicon-containing compound.

Formation of a porous film can employ commonly known methods, including a sintering method (or a fusion method, in which polymer microparticles or inorganic particles are partially fused together with a binder and employing pores formed between particles), a subtraction method (in which a layer composed of a solvent-soluble organic or inorganic material and a solvent-insoluble binder is formed and the organic or inorganic material is dissolved by a solvent to form pores), a foaming method of allowing a polymeric material to foam by heating or degassing, a phase conversion method of allowing a mixture of polymers to be phase-separated by using a good solvent and a poor solvent, and a radiation exposure method of exposing to various kinds of radiations to form pores. Specifically, there are cited electron insulation layers described in JP-A Nos. 10-30181 and 2003-107626, JP-A No. 7-95403, and Japanese Patent Nos. 2635715, 2849523, 2987474, 3066426, 3464513, 3483644, 3535942 and 3062203.

[Electrolyte Materials]

In the display element of the invention, the electrolyte may contain the following compounds when the electrolyte is liquid. Listed as potassium compounds are KCl, KI, and KBr, as lithium compounds are $LiBF_4$, $LiClO_4$, $LiPF_6$, and $LiCF_3SO_3$, and as tetraalkylammonium compounds are tetraethylammonium perchlorate, tetrabutylammonium perchlorate, tetraethylammonium borofluoride, tetrabutylammonium borofluoride, and tetrabutylammonium halide. Further, a molten salt electrolytic composition described in Paragraphs [0062] - [0081] of JP-A 2003-187881 can be preferably used. Further, a compound can be employed, which becomes an oxidation-reduction pair such as $I^-/I_3^-$, $Br^-/Br_3^-$, or quinone/hydroquinone.

Further, the electrolyte may contain the following compounds exhibiting electronic conductivity and ionic conductivity, when a supporting electrolyte is solid.

Such compounds include a vinyl fluoride polymer containing perfluorosulfonic acid, polythiophene, polyaniline, polypyrrole, triphenylamines, polyvinyl carbazoles, polymethylphenylsilanes, chalcogenides such as $Cu_2S$, $Ag_2S$, $Cu_2Se$, or $AgCrSe_2$, fluorine-containing compounds such as $CaF_2$, $PbF_2$, $SrF_3$, $LaF_3$, $TlSn_2F_5$, or $CeF_3$, Li salts such as $Li_2SO_4$, $Li_4SiO_4$, or $Li_3PO_4$, $ZrO_2$, CaO, $Cd_2O_3$, $HfO_2$, $Y_2O_3$, $Nb_2O_5$, $WO_3$, $Bi_2O_3$, AgBr, AgI, CuCl, CuBr, CuBr, CuI, LiI, LiBr, LiCl, $LiAlCl_4$, $LiAlF_4$, AgSBr, $C_5H_5NHAg_5I_6$, $Rb_4Cu_{16}I_7Cl_{13}$, $Rb_3Cu_7Cl_{10}$, LiN, $Li_5NI_2$ and $Li_6NBr_3$.

Further, it is possible to employ a gel-like electrolyte as a supporting electrolyte. When the electrolyte is non-aqueous, it is possible to employ oil gelling agents described in Paragraphs [0057] - [0059] of JP-A 11-185836.

[Thickener Added to Electrolyte]

It is possible to add a thickener to the electrolyte in the display element of the invention. Examples thereof include gelatin, gum Arabic, poly(vinyl alcohol), hydroxyethyl cellulose, hydroxypropyl cellulose, cellulose acetate, cellulose acetate butyrate, poly(vinylpyrrolidone), poly(alkylene glycol), casein, starch, poly(acrylic acid), poly(methylmethacrylic acid), poly(vinyl chloride), poly(methacrylic acid), copoly(styrene-maleic anhydride), copoly(styrene-acrylonitrile), copoly(styrene-butadiene), poly(vinyl acetals), such as poly(vinyl formal and poly(vinyl butyral), poly(esters), poly(urethanes), phenoxy resins, poly(vinylidene chloride), poly(epoxides), poly(carbonates), poly(vinyl acetate), cellulose esters, poly(amides). Hydrophobic transparent binders include polyvinyl butyral, cellulose acetate, cellulose acetate butyrate, polyester, polycarbonate, polyacrylic acid, and polyurethane.

These thickeners may be employed in combinations of at least two types. Further listed may be the compounds described on pages 71 - 75 of JP-A S64-13546. Of these, polyvinyl alcohols, polyvinylpyrrolidones, hydroxypropyl celluloses, and polyalkylene glycols are preferably employed in view of enhancement of compatibility with various additives and improvement of white particle dispersion stability.

[Other Additives]

The component layers of the display element of the invention may include subsidiary layers such as a protective

layer, a filter layer, an antihalation layer, a cross-over light cutting layer, or a backing layer. If desired, various types of chemical sensitizers, noble metal sensitizers, sensitizing dyes, supersensitizing dyes, couplers, high-boiling point solvents, antifoggants, stabilizers, development restrainers, bleach accelerators, fixing accelerators, color mixing inhibitors, formalin scavengers, toning agents, hardeners, surface active agents, thickeners, plasticizers, lubricants, UV absorbers, anti-irradiation dyes, filter light absorbing dyes, fungicides, polymer latexes, heavy metals, antistatic agents, and matting agents may be incorporated in the subsidiary layers.

These additives, described above, are detailed in Research Disclosure (hereinafter referred to as RD), Volume 176 Item/17643 (December 1978), Volume 184 Item/18431 (August 1979), Volume 187 Item/18716 (November 1979), and Volume 308. Item/308119 (December 1989).

Types and listed positions of the compounds cited in these three Research Disclosures are described below.

| Additive | RD 17643 Page & Class | RD 18716 Page & Class | RD 308119 Page & Class |
|---|---|---|---|
| Chemical Sensitizer | 23 III | 648 upper right | 96 III |
| Sensitizing Dye | 23 IV | 648-649 | 996-998 IV |
| Desensitizing Dye | 23 IV | | 998 IV |
| Dye | 25-26 VIII | 649-650 | 1003 VIII |
| Development Accelerator | 29 XXI | 648 upper right | |
| Antifoggant, Stabilizer | 24 IV | 649 upper right | 1006-1007 VI |
| Whitening Agent | 24 V | | 998 V |
| Hardener | 26 X | 651 left | 1004 - 5 X |
| Surface Active Agent | 26-27 XI | 650 right | 1005-1006 XI |
| Antistatic Agent | 27 XII | 650 right | 1006-1007 XIII |
| Plasticizer | 27 XII | 650 right | 1006 XII |
| Lubricant | 27 XII | | |
| Matting Agent | 28 XVI | 650 right | 1008-1009 XVI |
| Binder | 26 XXII | | 1003-1004 IX |
| Support | 28 XVII | | 1009 XVII |

[Layer Constitution]

A component layer between the opposing electrodes of the display element of the invention will further be explained.

It is possible to provide a component layer containing a positive hole transporting material as the component layer regarding the display element of the invention. Examples of the positive hole transporting material include aromatic amines, triphenylene derivatives, oligothiophene compounds, polypyrroles, polyacetylene derivatives, polyphenylene vinylene derivatives, polythienylene vinylene derivatives, polythiophene derivatives, polyaniline derivatives, polytoluidine derivatives, CuI, CuSCN, $CuInSe_2$, Cu(In,Ga)Se, $CuGaSe_2$, $Cu_2O$, CuS, $CuGaS_2$, $CuInS_2$, $CuAlSe_2$, GaP, NiO, CoO, FeO, $Bi_2O_3$, $MoO_2$, and $Cr_2O_3$.

[Substrate]

As the substrate usable in the invention are preferably used synthetic plastic films composed, for example, of polyolefins such as polyethylene or polypropylene, polycarbonates, cellulose acetate, polyethylene terephthalate, polyethylenedinaphthalene dicarboxylate, polyethylene naphthalates, polyvinyl chloride, polyimide, polyvinyl acetals, or polystyrene. Further, preferred are syndiotactic-structured polystyrenes. These can be prepared, employing the methods described, for example, in JP-A 62-117708, JP-A 1-46912, and JP-A 1-178505. Further listed are metal substrates of stainless steel, paper supports such as baryta paper or resin-coated paper, supports composed of the above plastic film having thereon a reflection layer, and those described, as a support, in JP-A 62-253195 (pages 29 - 31). It is possible to preferably employ those described on page 28 of RD No. 17643, from the light column on page 647 to the left column on page 648 of RD No. 18716, and on page 879 of RD No. 307105. As described in U.S. Patent No. 4,141,735, the supports can be used which is subjected to a thermal treatment at a temperature below Tg so that core-set curl is minimized. Further, the surface of these supports may be subjected to a surface treatment for the purpose of enhancement of adhesion of the support to another constitution layer. In the invention employed as a surface treatment may be a glow discharge treatment, an ultraviolet radiation treatment, a corona treatment, and a flame treatment. Further, employed may be supports described on pages 44 - 149 of Kochi Gijutsu (Known Technology) No.5 (published by AZTEC Japan., March 22, 1991). Further listed are those described on page 1009 of RD No. 308119, as well as in the item "Supports" on page 108 of Product Licensing Index Volume 92. Other than the above, employed may be glass substrates and epoxy resins kneaded with glass powder.

[Electrode]

It is preferred that at least one of the opposing electrodes is a metal electrode in the display element of the invention. Employed as the metal electrode may be metals such as platinum, gold, silver, copper, aluminum, zinc, nickel, titanium or bismuth, as well as alloys thereof, which are known in the art. Preferred metals employed in the metal electrodes are those which exhibit a work function near the oxidation-reduction potential of silver in the electrolyte. Of these, a silver electrode or an electrode composed of silver in an amount of at least 80% is advantageous to maintain reduction condition of silver, and further, results in anti-staining of electrodes. Employed as a method to prepare the electrodes may be conventional ones such as an evaporation method, a printing method, an ink-jet printing method, a spin coating method, or a CVD method.

Further, it is preferred that in the display element of the present invention, at least one of the opposing electrodes is transparent. Transparent electrodes are not particularly limited as long as they are transparent and electrically conductive. Examples thereof include indium tin oxide (ITO), indium zinc oxide (IZO), fluorine-doped tin oxide (FTO), indium oxide, zinc oxide, platinum, gold, silver, rhodium, copper, chromium, carbon, aluminum, silicon, amorphous silicon, and BSO (bismuth silicon oxide). In order to form electrodes, an ITO layer may be subjected to mask evaporation on a substrate employing a sputtering method, or after forming an ITO layer on the entire surface, patterning may be performed employing photolithography. The surface resistance value is preferably at most 100 Ω/□, but is more preferably at most 10 Ω/□. The thickness of the transparent electrode is not particularly limited, but is commonly 0.1 to 20 μm.

[Other Component Materials in Display Element]

Sealing agents, columnar materials, and spacer particles may be employed in the display element of the invention, if desired.

Sealing agents are those which perform sealing so that leak to the exterior is minimized, and are called sealants. Employed as sealing agents may be heat curing, light curing, moisture curing, or anaerobic curing type resins such as epoxy resins, urethane resins, acryl resins, vinyl acetate resins, en-thiol resins, silicon-containing resins or modified polymer resins.

The columnar materials provide a strong self-supporting capability (strength) between substrates. For example, listed may be a cylindrical form, a quadrangular form, an elliptic from, and a trapezoidal form which are arranged at definite intervals in a specified pattern such as a lattice. Further employed may be stripe-shaped ones arranged at definite intervals. It is preferred that the columnar materials are not randomly arranged but arranged at an equal distance so that the interval gradually varies, or a predetermined pattern is repeated at a definite cycle so that the distance between substrates is nearly maintained and image display is not degraded. When the columnar materials are such that the ratio of the area occupied by the display region of a display element is 1 - 40%, sufficient strength as a display element for commercial viability is obtained.

Spacers may be provided between paired substrates in order to maintain a uniform gap between them. As such spacers, exemplified may be spheres composed of resins or inorganic oxides. Further suitably employed are adhesion spacers, the surface of which is coated with thermoplastic resins. Columnar materials only may be provided

in order to maintain a uniform gap between the substrates. However, both spacers and columnar materials may be provided. Instead of the columnar materials, only spacers may be employed as space-maintaining members. The diameter of spacers, when a columnar material is formed, is at most its height, but is preferably equal to the above height. When no columnar material is formed, the diameter of spacers corresponds to the thickness of the cell gap.

[Screen Printing]

It is possible to form sealing agents, columnar materials, and electrode patterns, employing a screen printing method in the present invention. In screen printing methods, a screen, on which predetermined patterns are formed, is applied onto the electrode surface, and printing materials (compositions to form columnar materials such as light-curing resins) are placed on the screen. Subsequently, a squeegee is moved at a predetermined pressure, angle and rate. By such action, the printing materials are transferred onto the above substrate via the pattern of the screen. Subsequently, the transferred materials are thermally cured and dried. When columnar materials are formed employing the screen printing method, resinous materials are not limited to light-curing resins, but also employed, for example, may be heat curable resins such as epoxy resins or acryl resins, as well as thermoplastic resins. Listed as thermoplastic resins are: polyvinyl chloride resins, polyvinylidene chloride resins, polyvinyl acetate resins, polymethacrylic acid ester resins, polyacrylic acid ester resins, polystyrene resins, polyamide resins, polyethylene resins, polypropylene resins, fluororesins, polyurethane resins, polyacrylonitrile resins, polyvinyl ether resins, polyvinyl ketone resins, polyether resins, polyvinylpyrrolidone resins, saturated polyester resins, polycarbonate resins, and chlorinated polyether resins. It is preferable that resinous materials are employed in the form of a paste, while dissolved in suitable solvents.

As noted above, after forming the columnar materials on the substrate, if desired, a spacer is provided on at least one side of the substrate, and paired substrates are placed so that the electrode forming surfaces face each other, whereby a vacant cell is formed. By heating the paired facing substrates, under application of pressure from both sides, they are adhered to each other, whereby a display cell is obtained. Preparation of a display element may be achieved by injecting an electrolyte composition between the substrates, employing a vacuum injection method. Alternatively, during adhesion of the substrates, an electrolyte composition may be dripped onto the surface of one of the substrates and then a liquid crystal composition is injected simultaneously sealed when the substrates are adhered to each other.

[Method to Drive Display Element]

It is preferable to drive a display element so that blackened silver is deposited via voltage application of at least deposition overvoltage and deposition of blackened silver is allowed to continue via application of voltage lower than the deposition overvoltage in the display element of the present invention. It is possible to lower energy for writing, decrease the driving circuit load, as well as to enhance writing rate by performing the above driving operation. It is common knowledge that during the electrode reaction in the electrochemical field, overvoltage exists. Overvoltage is detailed, for example, on page 121 of "Denshi Ido no Kagaku - Denkikagaku Nyumon (Chemistry of Electron Transfer - Introduction to Electrochemistry)" (1996, published by Asakura Shoten). It is possible to consider that the display element of the present invention undergoes an electrode reaction of an electrode with silver in the electrolyte. Consequently, it easy to understand the presence of overvoltage during silver dissolution and deposition. Since the magnitude of overvoltage is controlled by exchange current density, it is assumed that the fact that as shown in the present invention, after formation of blackened silver, deposition of blackened silver continues via application of voltage lower than the deposition overvoltage, is that the surface of the blackened silver results in less excessive electric energy, whereby it is possible to easily perform electron injection.

Driving operation of the display element of the invention may be simple matrix driving or active matrix driving. Simple matrix driving, as described in the invention, refers to the driving method in which electric current is sequentially applied to a circuit in which a positive electrode line containing a plurality of positive electrodes faces a negative electrode line containing a plurality of negative electrodes so that each line intersects in the perpendicular direction. By employing simple matrix driving, it is possible to simplify the circuit structure and the driving IC, resulting in advantages such as lower production cost. Active matrix driving refers to a system in which scanning lines, data lines, and current feeding lines are formed in a checkered pattern and driving is performed by TFT circuits arranged in each of the squares of the checkered pattern. Since it is possible to switch for each pixel, advantages result in gradation as well as memory function. For example, it is possible to employ the circuit described in Fig. 5 of JP-A 2004-29327.

[Application to Products]

It is possible to apply the display element of the invention to electronic book related fields, ID card related fields, public information related fields, transportation related fields, broadcasting related fields, account settling fields, and distribution and logistics related fields. Typical examples of the products applied include door keys, student identification

cards, employee ID cards, various club membership cards, convenience store cards, department store cards, vending machine cards, gas station cards, subway and railroad cards, bus cards, cash cards, credit cards, highway cards, driver licenses, hospital medical examination cards, health insurance cards, Basic Resident Registers, passports, and electronic books.

## EXAMPLES

The invention will now be specifically described with reference to examples, however the present invention is not limited thereto. In the examples, "parts and "%" represent parts by weight and % by weight, unless otherwise specified.

Example 1

«Preparation of Display Elements»

[Preparation of Display Element 1]

(Preparation of Electrolytic Solution 1)

Sodium iodide of 90 mg and 75 mg of silver iodide were added to 2.5 g of dimethyl sulfoxide, and allowed to completely dissolve. Thereafter, 150 mg of polyvinylpyrrolidone (with an average molecular weight of 15,000) were added to the solution and stirred over one hour while heated at 120°C, whereby Electrolytic Solution 1 was prepared.

(Preparation of Electrode 1)

An ITO film, at a pitch of 145 μm and an electrode width of 130 μm, was formed on a 1.5 mm thick 2 cm x 4 cm glass substrate employing a conventional method, whereby a transparent electrode (namely Electrode 1) was prepared.

(Preparation of Electrode 2)

A silver-palladium electrode (namely Electrode 2) with a thickness of 0.8 μm, a pitch of 145 μm and an electrode gap of 130 μm was prepared on a 1.5 mm thick 2 cm x 4 cm glass substrate employing a conventional method.

(Preparation of Electrode 3)

A mixed dispersion, which was obtained by mixing a 2% isopropanol solution of polyvinyl alcohol (with an average polymerization degree of 3500 and a saponification degree of 87%) and titanium oxide in an amount of 20% by weight, and dispersing the mixture in an ultrasonic disperser, was coated at 100 μm on Electrode 2 whose peripheral portion was hemmed by an olefin type sealing agent containing spherical glass beads of an average particle diameter of 40 μm at a volume ratio of 10%, dried at 15°C for 30 minutes, and further dried at 45 °C for one hour, whereby Electrode 3 was obtained.

(Preparation of Display Element)

Electrode 3 was superposed on Electrode 1, followed by heating and pressing, whereby an empty cell was prepared. Electrolytic Solution 1 was injected into the empty cell via a vacuum injection method and the inlet for injection was sealed with epoxy type ultraviolet ray-curable resin, whereby Display Element 1 was prepared.

[Preparation of Display Element 2]

Display Element 2 was prepared in the same manner as in Display Element 1, except that the following electrode 4 was used instead of electrode 1.

(Preparation of Electrode 4)

An aqueous 4% by weight gelation solution, in which dyes AI-1, AI-2 and AI-3 described below were dissolved, was coated at a thickness of 25 μm on the surface of the glass substrate of Electrode 1 opposite the transparent electrode, gelatin-set at 5°C, and dried at 45°C for one hour, whereby Electrode 4 was obtained.

AI-1

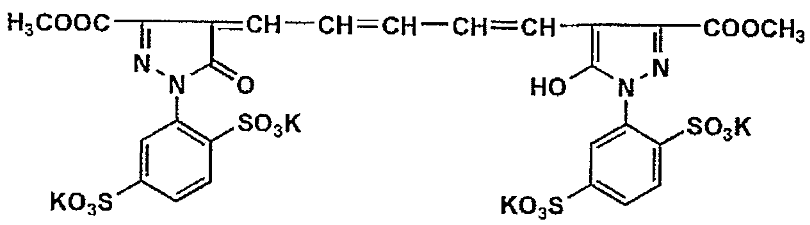

AI-2

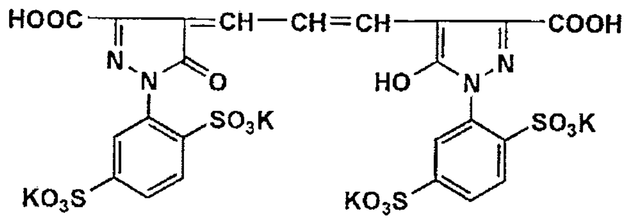

AI-3

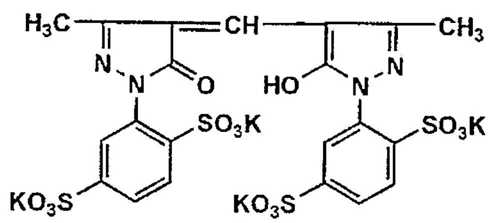

«Evaluation of Display Elements»

(Evaluation of Color Tone)

L* value, a* value and b* value of Display Element 1 were measured at a D65 light source, employing a spectrocolorimeter CM-3700d, produced by Konica Minolta Sensing, Inc., and was defined as L1, a1 and b1, respectively. Similarly, L* value, a* value and b* value of news papers available on the market were measured, and was defined as L2, a2 and b2, respectively. ΔE was determined from the following formula for evaluation of color tone difference.

$$\Delta E_1 = [(L2-L1)^2 + [(a2-a1)^2 + [(b2-b1)^2]^{1/2}$$

The less $\Delta E_1$ is, the less the color tone difference is. $\Delta E_1$ was 5.3 with regard to Display Element 1 and news papers. $\Delta E_1$ was 0.2 with regard to news papers and Display Element 1 containing the dyes. It has proved that the color tone-adjusting layer in the invention effectively works.

Example 2

« [Preparation of Display Elements»

[Preparation of Display Elements 3 through 10]

Display Elements 3 through 10 were prepared in the same manner as in Display Element 1, except that the coating amount of titanium oxide of Electrode 3 varied to give a reflectance of 70%, 65%, 60%, 55%, 50%, 45%, 40% and 35%, respectively, the reflectance being measured employing a 550 nm light of CM-3700d.

[Preparation of Display Elements 11 through 18]

Display Elements 11 through 18 were prepared in the same manner as in Display Elements 3 through 10, respectively, except that Electrode 1 was replaced with the following Electrode 5.

<Preparation of Electrode 5>

Electrode 5 was prepared in the same manner as in electrode 4, except that the following optical brightening agent W-1 (at a coating amount of 200 $mg/m^2$) was used instead of the dyes.

W-1

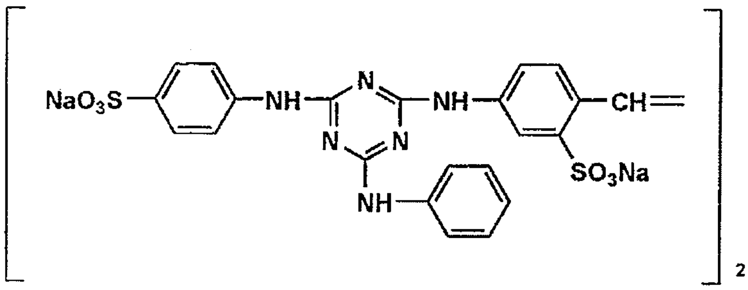

«Evaluation of Display Elements»

(Evaluation of Whiteness)

Display Elements having the same coating amount of titanium oxide which were taken from the group of Display Elements 3 through 10 and from the group of Display Elements 11 through 18, were subjected to sensory testing by examiners. It proved that when the reflectance is from 45 to 60%, optical brightening agent-containing Display elements 13 through 16 were more whitish than Display elements 5 through 8. On the other hand, it proved that when the reflectance is not less than 65% or not more than 40%, there was no difference in whiteness between display elements containing optical brightening agent and display elements containing no optical brightening agent. The effect of the color tone-adjusting layer in the invention was confirmed.

Example 3

«Preparation of Display Elements»

[Preparation of Display Element 19]

Display Element 19 was prepared in the same manner as in Display Element 14 of Example 2, except that optical whitening agent W-1 was removed from Electrode 5, and added to the Electrolytic Solution 1.

[Preparation of Display Element 20]

Display Element 20 was prepared in the same manner as in Display Element 14 of Example 2, except that the

dimethylsulfoxide was replaced with dimethylformamide of the same amount, the silver iodide was replaced with silver chloride of the same mol, and the sodium iodide was replaced with Exemplified compound (4-12) of the same mol.

[Preparation of Display Element 21]

Display Element 21 was prepared in the same manner as in Display Element 20 above, except that Optical brightening agent W-1 was removed from Electrode 5, and added to Electrolytic Solution 1.

[Preparation of Display Element 22]

Display Element 22 was prepared in the same manner as in Display Element 14 of Example 2, except that the dimethylsulfoxide was replaced with propylene carbonate of the same amount, the silver iodide with silver chloride of the same mol, and the sodium iodide with Exemplified compound (4-12) of the same mol.

[Preparation of Display Element 23]

Display Element 23 was prepared in the same manner as in Display Element 22 above, except that Optical brightening agent W-1 was removed from Electrode 5, and added to Electrolytic Solution 1.

[Preparation of Display Element 24]

Display Element 24 was prepared in the same manner as in Display Element 14 of Example 2, except that the dimethylsulfoxide was replaced with propylene carbonate of the same amount, the silver iodide with silver p-toluene sulfonate of the same mol, and the sodium iodide with Exemplified compound (4-12) of the same mol.

[Preparation of Display Element 25]

Display Element 25 was prepared in the same manner as in Display Element 24 above, except that Optical brightening agent W-1 was removed from Electrode 5, and added to Electrolytic Solution 1.

[Preparation of Display Elements 26 and 27]

Display Element 26 was prepared in the same manner as in Display Element 24 above, except that Exemplified compound (4-12) was replaced with Exemplified compound (3-4) of 0.7 times by mole the amount Exemplified compound (4-12).

Display Element 27 was prepared in the same manner as in Display Element 25 above, except that Exemplified compound (4-12) was replaced with Exemplified compound (3-4) of 0.7 times by mole the amount Exemplified compound (4-12). «Evaluation of Display Element>

With respect to the resulting display elements prepared above and Display Element 14 prepared in Example 2, a driving condition giving an *L value of 65 was determined, measured employing a D65 light source of a spectro-colorimeter CM-3700d produced by Konica Minolta Sensing Inc. Subsequently, when each display element above was driven under the driving condition to exhibit white, an *L value, an *a value and a *b value were determined, and designated as L3, a3 and b3, respectively. Further, after the element was allowed to stand at 65°C for two weeks, an *L value, an *a value and a *b value were determined in the same manner as above, and designated as L4, a4 and b4, respectively. The following $\Delta E_2$ was determined from the resulting measurements for evaluation of color tone difference.

$$\Delta E_2 = [(L4-L3)^2 + (a4-a3)^2 + (b4-b3)^2]^{1/2}$$

The results are shown in Table 1. The smaller the $\Delta E_2$ is, the less the color tone difference is. A smaller $\Delta E_2$ exhibits better results.

Table 1

| Display Element Nos. | Evaluation $\Delta E_2$ | Remarks |
|---|---|---|
| 14 | 4.5 | Inventive |
| 19 | 6.3 | Comparative |
| 20 | 3.9 | Inventive |
| 21 | 6.1 | Comparative |
| 22 | 3.0 | Inventive |
| 23 | 6.5 | Comparative |
| 24 | 2.5 | Inventive |
| 25 | 6.1 | Comparative |
| 26 | 2.4 | Inventive |
| 27 | 6.2 | Comparative |

As is apparent from Table 1, inventive display elements having a constitution defined in the invention excel in white display stability even after storage at high temperature for a long term.

## Claims

1. A display element comprising an electrolyte containing silver or a compound containing silver in its chemical structure between opposed electrodes to be driven so as to cause dissolution and precipitation of silver, wherein a color tone-adjusting layer, a transparent electrode and an electrolyte layer is provided in that order as viewed from a viewing direction of the element, and wherein when white is displayed, a reflectance at 550 nm of the display element without the color tone-adjusting layer is from 45% to 60%.

2. The display element of claim 1, wherein the color tone-adjusting layer contains at least one kind of optical whitening agents.

3. The display element of claim 1, wherein the color tone-adjusting layer contains at least one kind of blue colorants.

4. The display element of any one of claims 1 through 3, wherein the electrolyte comprises at least one of the compounds represented by Formulas (1) and (2) and at least one of the compounds represented by Formulas (3) and (4),

Formula (1)

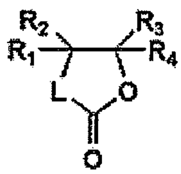

wherein L represents an oxygen atom or $CH_2$, and $R_1$ through $R_4$ independently represent a hydrogen atom, an alkyl group, an alkenyl group, an aryl group, a cycloalkyl group, an alkoxyalkyl group, or an alkoxy group,

Formula (2)

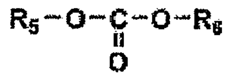

wherein $R_5$ and $R_6$ independently represent a hydrogen atom, an alkyl group, an alkenyl group, an aryl group, a cycloalkyl group, an alkoxyalkyl group, or an alkoxy group,

Formula (3) $R_7\text{-S-}R_8$

wherein $R_7$ and $R_8$ independently represent a substituted or unsubstituted hydrocarbon group, provided that when a ring containing an S atom is formed, it does not form an aromatic group,

Formula (4)

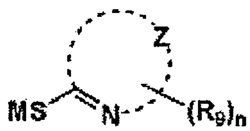

wherein M represents a hydrogen atom, a metal atom or a quaternary ammonium group; Z represents a nitrogen-containing heterocyclic ring; n represents an integer of 0 to 5; and $R_9$ represents a halogen atom, an alkyl group, an aryl group, an alkylcarbonamido group, an arylcarbonamido group, an alkylsulfonamido group, an arylsulfonamido group, an alkoxy group, an aryloxy group, an alkylthio group, an arylthio group, an alkylcarbamoyl group, an arylcarbamoyl group, a carbamoyl group, an alkylsulfamoyl group, an arylsulfamoyl group, a sulfamoyl group, a cyano group, an alkylsulfonyl group, an arylsulfonyl group, an alkoxycarbonyl group, an aryloxycarbonyl group, an alkylcarbonyl group, an arylcarbonyl group, an acyloxy group, a carboxyl group, a carbonyl group, a sulfonyl group, an amino group, a hydroxyl group or a heterocyclic group, provided that when n is at least 2, each $R_9$'s may be the same or different and may combine with each other to form a condensed ring.

5. The display element of any one of claims 1 through 4, wherein a condition specified by Inequality (1) is satisfied:

Inequality (1)

$$0 \leq [X]/[Ag] \leq 0.01$$

wherein [X] represents a mol concentration (mol/kg) of a halogen ion or a halogen atom contained in the electrolyte, and [Ag] represents a total mol concentration (mol/kg) of silver or a compound containing silver in the chemical structure contained in the electrolyte.

FIG. 1

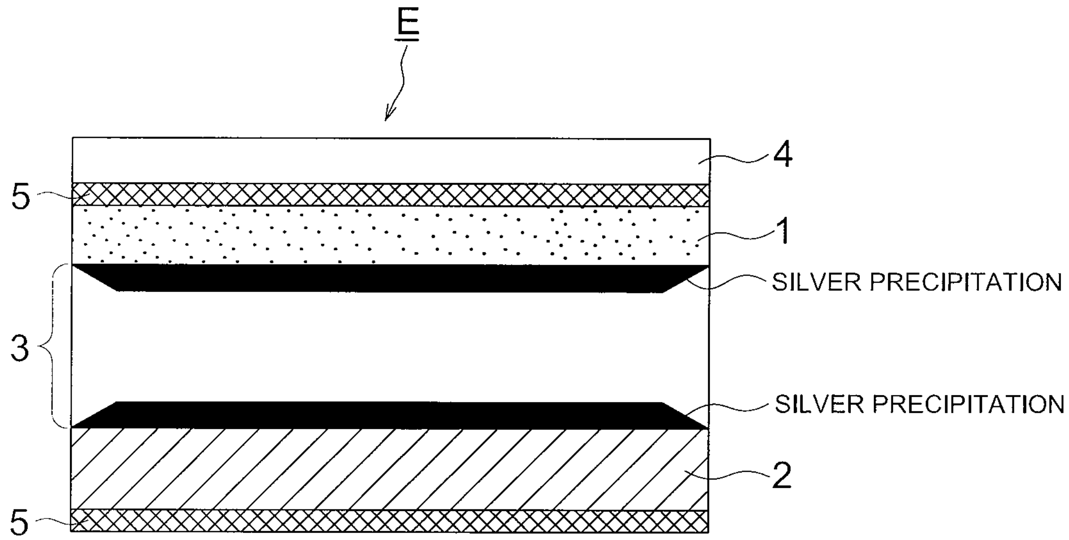

**INTERNATIONAL SEARCH REPORT**

International application No.
PCT/JP2006/325606

A. CLASSIFICATION OF SUBJECT MATTER
*G02F1/17*(2006.01)i, *G02F1/19*(2006.01)i, *G09F9/30*(2006.01)i

According to International Patent Classification (IPC) or to both national classification and IPC

B. FIELDS SEARCHED

Minimum documentation searched (classification system followed by classification symbols)
G02F1/17, G02F1/19, G09F9/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-241227 A (Sony Corp.),<br>27 August, 2003 (27.08.03),<br>Full text; all drawings<br>& US 2005/87448 A1 & EP 1475656 A1<br>& WO 03/69402 A1 & CN 1646979 A | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>27 March, 2007 (27.03.07) | Date of mailing of the international search report<br>03 April, 2007 (03.04.07) |
| Name and mailing address of the ISA/<br>Japanese Patent Office | Authorized officer |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4240716 A
- US 3428603 A
- JP 2003241227 A
- EP 549489 A
- JP 7152129 A
- JP 3251840 A
- JP 6003770 A
- JP 1280750 A
- JP 1150132 A
- JP 9203984 A
- JP 6413546 A
- US 4960681 A
- JP 62245260 A
- JP 10076621 A
- US 4678739 A
- US 4791042 A
- JP 59116655 A
- JP 62245261 A
- JP 61018942 A
- JP 61249054 A
- JP 61245153 A
- JP 4218044 A
- JP 62234157 A
- JP 10030181 A
- JP 2003107626 A
- JP 7095403 A
- JP 2635715 B
- JP 2849523 B
- JP 2987474 B
- JP 3066426 B
- JP 3464513 B
- JP 3483644 B
- JP 3535942 B
- JP 3062203 B
- JP 2003187881 A
- JP 11185836 A
- JP S6413546 A
- JP 62117708 A
- JP 1046912 A
- JP 1178505 A
- JP 62253195 A
- US 4141735 A
- JP 2004029327 A


### Non-patent literature cited in the description


- **J. A. RIDDICK ; W. B. BUNGER ; T. K. SAKANO.** Organic Solvents. John Wiley & Sons, 1986
- **Y. MARCUS.** Ion Solvation. John Wiley & Sons, 1985
- **C. REICHARDT.** Solvents and Solvent Effects in Chemistry. VCH, 1988
- **G. J. JANZ ; R. P. T. TOMKINS.** Nonaqueous Electrolytes Handbook. Academic Press, 1972, vol. 1
- *Journal of the Ceramic Society of Japan,* 1994, vol. 102 (2), 200
- *Yogyo-kyokai-shi,* vol. 90 (4), 157
- *J. of Non-Cryst. Solids,* 1986, vol. 82, 400
- Kochi Gijutsu. AZTEC Japan, 22 March 1991, 44-149
- Denshi Ido no Kagaku - Denkikagaku Nyumon. Asakura Shoten, 1996, 121